# EUROPÄISCHE PATENTSCHRIFT

(11) **EP 2 144 742 B1**
(45) Veröffentlichungstag und Bekanntmachung des Hinweises auf die Patenterteilung: **12.01.2011**
(21) Anmeldenummer: 08757933.0
(22) Anmeldetag: 10.04.2008
(51) Int. Cl.: B29C 49/56

(54) **VORRICHTUNG ZUR BLASFORMUNG VON BEHÄLTERN**
DEVICE FOR BLOW MOLDING CONTAINERS
DISPOSITIF DE MOULAGE PAR SOUFFLAGE DE RÉCIPIENTS

(30) Priorität: 15.05.2007 DE 102007022638
(43) Veröffentlichungstag der Anmeldung: 20.01.2010
(73) Patentinhaber: KHS Corpoplast GmbH & Co. KG, 20539 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22869 Hamburg (DE)
(74) Vertreter: Klickow, Hans-Henning
(86) Internationale Anmeldenummer: PCT/DE2008/000622
(87) Internationale Veröffentlichungsnummer: WO 2008/138293

(56) Entgegenhaltungen:
- WO-A-2006/029585
- WO-A-2007/012309
- FR-A- 2 841 495
- US-A- 3 856 450
- US-A1- 2004 156 943
- US-B1- 6 929 462

## Beschreibung

Die Erfindung betrifft eine vorrichtung zur Blasformung von Behältern, die mindestens eine auf einer Tragstruktur angeordnete Blasstation zur Umformung von thermoplastischen Vorformlingen in die Behälter aufweist und bei der die Blasstation mit mindestens zwei von Formträgern gehalterten Blasformsegmenten sowie einem Bodenteil versehen ist, sowie bei der sowohl der Formträger als auch das Bodenteil mechanisch positionierbar angeordnet und einer der Formträger unbeweglich und der andere Formträger verschwenkbar von der Tragstruktur gehaltert ist, wobei das Bodenteil relativ zu jedem der beiden Formträger beweglich angeordnet ist.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Ver-festigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Form-träger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung von öffnungs- und Schließbewegungen der Blasstation sowie die Durchführung von Hubbewegungen des Bodenteiles erfolgt typischerweise mechanisch gesteuert. Bei Blasstationen, die auf rotierenden Transporträdern angeordnet sind, werden ortsfest auf dem Maschinengestell angeordnete Kurvensegmente verwendet, entlang deren Kurvenrollen geführt werden, die mit den zu bewegenden Bauelementen verbunden sind. Die Kurvensegmente werden in der Regel nur entlang derjenigen Teile des Blasrades angeordnet, entlang deren eine Veränderung der Positionierung der zugeordneten Kurvenrollen vorgesehen ist. In der jeweils vorgesehenen Endposition werden die Kurvenrollen dann durch geeignete Mittel stabilisiert.

Aus der WO 2007/012309 A ist es bereits bekannt, ein Bodenteil einer Blasstation in Richtung einer Längsachse der Blasstation zu positionieren. Ebenfalls wird in diesem DOkument eine Blasstation beschrieben, bei der ein Formträger relativ zu einem Blasrad unbeweglich und der andere Formträger beweglich angeordnet ist.

Aus der FR 2841495 A ist es ebenfalls bekannt, eine Bodenform in einer axialen Richtung beweglich zu seitlichen Blasformsegmenten anzuordnen. In einem geschlossenen Zustand ist die Bodenform formschlüssig mit den seitlichen Blasformsegmenten verbunden. Der Formschluß wird durch ein Aufklappen der beiden Formsegmente aufgehoben.

Eine ähnliche Vorrichtung unter Einbeziehung einer mechanischen Bewegungskopplung zwischen den seitlichen Blasformsegmenten und dem Bodenteil wird in der WO 2006/029585 A beschrieben.

Aufgabe der vorliegenden Erfindung ist es, eine Vorrichtung der einleitend genannten Art derart zu verbessern, daß eine kompakte Bauform unterstützt wird.

Diese Aufgabe wird erfindungsgemäß dadurch gelöst, daß die Formträger und das Bodenteil zur Durchführung von Positionierbewegungen mechanisch miteinander gekoppelt sind, und daß das Bodenteil relativ zu den Formträgern eine Bewegungsbahn aufweist, die sowohl mit einer in einer Längsrichtung der Blasstation verlaufenden Komponente als auch mit einer quer zur Längsrichtung verlaufenden Komponente versehen ist.

Durch die Konstruktion der Blasstation mit einem feststehenden und einem beweglichen Formträger ist es möglich, eine äußerst kompakte Anordnung einer Mehrzahl nebeneinander angeordneter Blasstationen vorzunehmen. Eine derartige Anordnung führt aber zu dem Problem, daß eine übliche Hubbewegung des Bodenteiles relativ zu den Formträgern nicht durchführbar ist, da in der Regel ein Formschluß zwischen dem Bodenteil und dem feststehenden Formträger realisiert ist. Selbst bei einer freien Beweglichkeit des Bodenteiles relativ zum Formträger besteht aber das Problem eines Formschlusses zwischen dem geblasenen Behälter und der Blasform, so daß auch hierdurch die Durchführung einer einfachen Bewegung verhindert wird.

Durch die erfindungsgemäße Führung des Bodenteiles und die mechanische Kopplung des Bodenteiles mit dem beweglichen Formträger ist es möglich, mit äußerst geringem Zeitbedarf und somit geringen verlusten an verfügbarer Prozeßzeit, mechanisch wenig aufwendig und zugleich mit hoher Wiederholungsgenauigkeit der durchzuführenden Bewegungen eine Entnahme des geblasenen Behälters aus der Blasform durchzuführen.

Aufgrund der Durchführung der Bewegung des Bodenteiles in Richtung der Längsachse der Blasstation erfolgt eine Trennung eines eventuellen Formschlusses zwischen einer Bodenkontur des geblasenen Behälters und der Kontur der Bodenform. Nach einer Durchführung der seitlichen Positionierbewegung des Bodenteiles überlagert zur Durchführung der Hubbewegung des Bodenteiles ist der geblasene Behälter in allen drei räumlichen Dimensionen von der Blasform freigegeben und kann beispielsweise in horizontaler Richtung aus der geöffneten Blasstation entnommen werden. Die Längsachse der Blasstation verläuft typischer Weise in einer vertikalen Richtung

Eine hohe Genauigkeit bei der Einhaltung der durchzuführenden Bewegungen kann dadurch erreicht werden, daß das Bodenteil kurvengesteuert positionierbar ist.

Eine einfache Bewegungsvorgabe kann dadurch erfolgen, daß das Bodenteil mit dem beweglichen Formträger gekoppelt ist.

Zu einer kompakten Konstruktion trägt es bei, daß das Bodenteil relativ zu einer senkrecht verlaufenden Achse drehbar angeordnet ist.

Ebenfalls wird eine kompakte Konstruktion der Blasstation dadurch unterstützt, daß sich die Achse als eine Verlängerung einer Stationsachse der Blasstation erstreckt.

Eine vorteilhafte Bewegungsvorgabe erfolgt dadurch, daß das Bodenteil mit einer Kurvenrolle in eine Kurvenbahn eingreift, die sich im wesentlichen tangential zu einer Bewegungsbahn des verschwenkbaren Formträgers erstreckt.

Insbesondere können äußerst einfache Bewegungsabläufe dadurch definiert werden, daß das Bodenteil eine Bewegungsbahn aufweist, die innerhalb eines Segmentes einer Mantelkurve angeordnet ist, die im wesentlichen zylindrisch zur Stationsachse positioniert ist.

Eine mechanisch robuste Kopplung wird dadurch bereitgestellt, daß das Bodenteil über eine Koppelstange und einen Positionierhebel mit einer Antriebswelle verbunden ist.

Zur Erleichterung einer Überlagerung von linearen Bewegungen sowie aus Drehbewegungen abgeleiteten Bewegungskomponenten wird vorgeschlagen, daß Enden der Koppelstange nachgiebig sowohl mit dem Bodenteil als auch mit dem Positionierhebel gekoppelt sind.

Eine typische Anwendung besteht darin, daß die Blasstation auf einem Blasrad angeordnet ist.

Die Aufhebung eines Formschlusses zwischen einem geblasenen Behälter und der Blasform kann insbesondere dadurch unterstützt werden, daß das Bodenteil quer zu einer von den Blasformsegmenten in einem geschlossenen Zustand der Blasstation aufgespannten Trennebene positionierbar ist.

In den Zeichnungen sind Ausführungsbeispiele der Erfindung schematisch dargestellt. Es zeigen:
- Fig. 1: Eine perspektivische Darstellung einer Blassta- tion zur Herstellung von Behältern aus Vorform- lingen,
- Fig. 2: einen Längsschnitt durch eine Blasform, in der ein Vorformling gereckt und expandiert wird,
- Fig. 3: eine Skizze zur veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine perspektivische Darstellung einer Blassta- tion mit einem feststehenden und einem verschwenkbar angeordneten Träger sowie dreidi- mensional positionierbarem Bodenteil in einem vollständig geöffneten Zustand der Blasstation,
- Fig. 6: die Anordnung gemäß Fig. 5 nach einer teilwei- sen Durchführung eines Schließens der Blassta- tion,
- Fig. 7: die Anordnung gemäß Fig. 6 kurz vor einem Ende des Schließens der Blasstation und
- Fig. 8: eine perspektivische Darstellung der Anordnung gemäß Fig. 7 bei einer Blickrichtung schräg von unten.

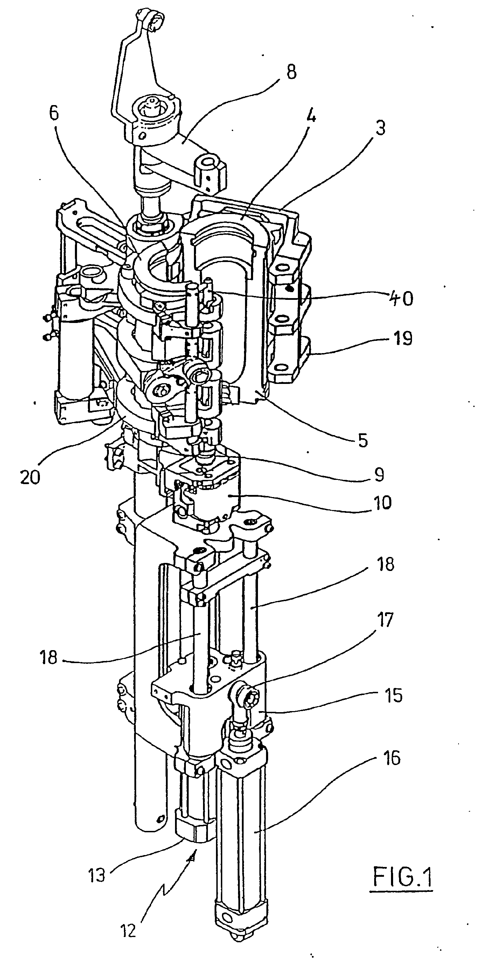

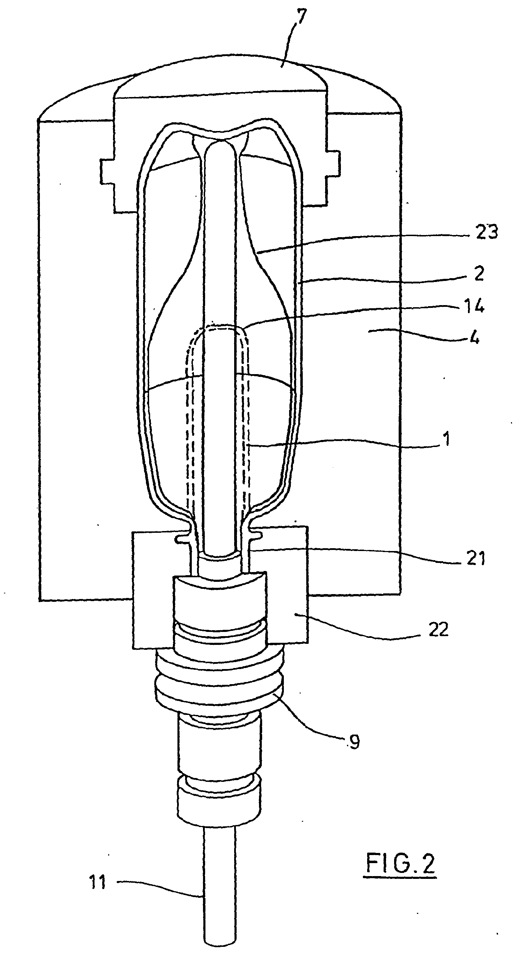

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blas-station (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

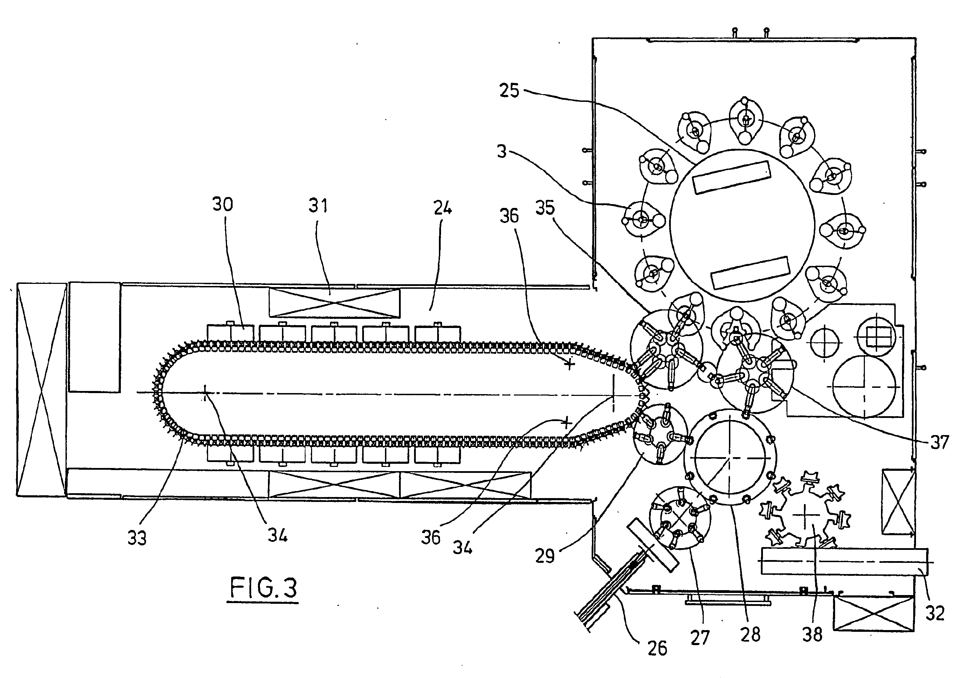

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

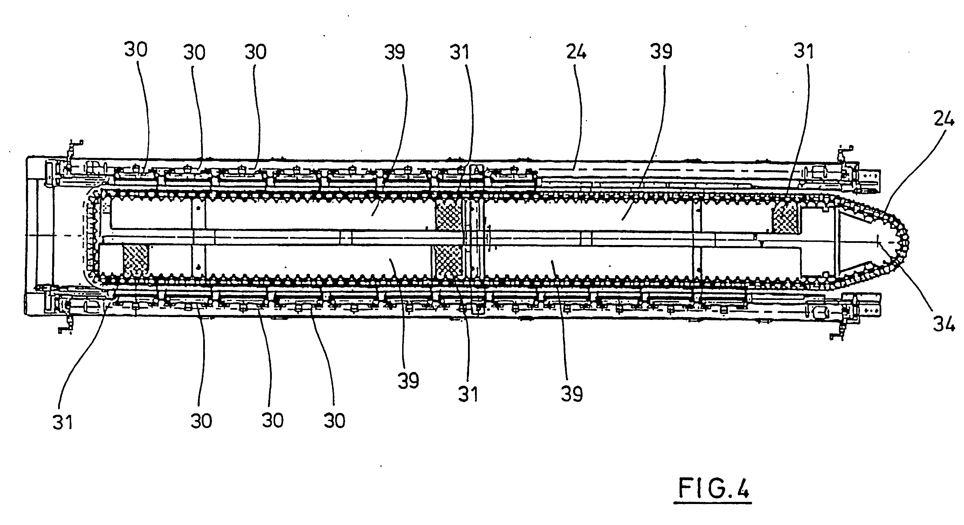

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

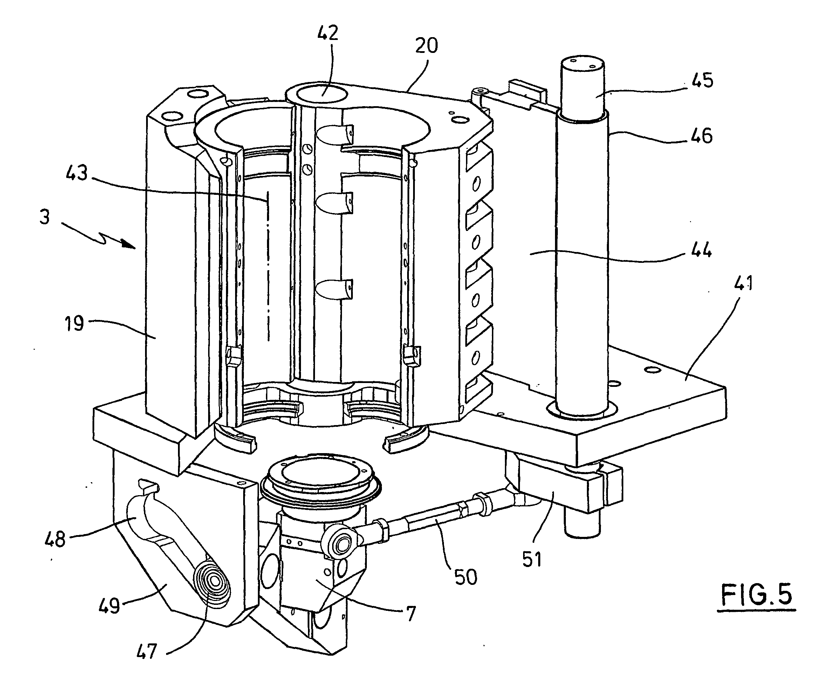

Fig. 5 zeigt eine perspektivische Darstellung einer Blasstation (3), bei der der Formträger (19) starr und der Formträger (20) verschwenkbar von einer Tragstruktur (41) gehaltert ist. Beim dargestellten Ausführungsbeispiel ist das Bodenteil (7) in lotrechter Richtung unterhalb der Formträger (19, 20) angeordnet. Bei einer derartigen Anordnung werden die Behälter (2) mit ihren Mündungsabschnitten (21) in lotrechter Richtung nach oben geformt.

Eine Schwenkbewegung des Formträgers (20) erfolgt relativ zu einer Stationsachse (42), die sich in einer Längsrichtung (43) der Blasstation (3) erstreckt. Zur Vorgabe der Bewegungen des Formträgers (20) ist dieser über einen Kupplungshebel (44) mit einer Antriebswelle (45) verbunden. Beispielsweise kann der Kopplungshebel (44) die Antriebswelle (45) mit einer Hülse (46) umschließen, die auf der Antriebswelle (45) aufsitzt.

Gemäß dem Ausführungsbeispiel in Fig. 5 ist das Bodenteil (7) über eine Kurvenrolle (47) in einer Kurvenbahn (48) geführt, der sich im Bereich eines Kurventrägers (49) erstreckt. Der Kurventräger (49) ist unbeweglich mit der Tragstruktur (41) verbunden. Die Kurvenbahn (48) erstreckt sich mit einer Komponente sowohl in der Längsrichtung (43) der Blasstation (43) als auch mit einer Komponente quer zur Längsrichtung (43). Die Querorientierung der Kurvenbahn (48) erfolgt hierbei bevorzugt derart, daß eine Ausrichtung im wesentlichen quer zu einer Trennebene der Formhälften (5, 6) vorliegt, die diese mit ihren einander zugewandten Begrenzungen in einem geschlossenen Zustand der Blasstation (3) definieren.

Bei einer Anordnung der Blasstation (3) auf einem rotierenden Blasrad (25) erstreckt sich die Kurvenbahn (48) mit einer tangentialen Komponente relativ zu einem Umfang des Blasrades (25).

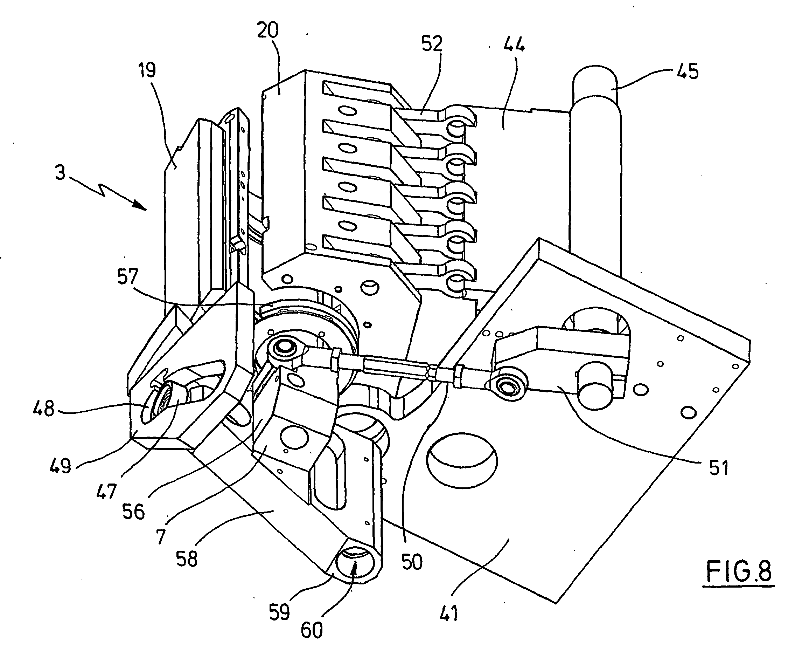

Zur Vorgabe von Positionierbewegungen ist das Bodenteil (7) über eine Koppelstange (50) mit einem Positionerhebel (51) verbunden, der mit der Antriebswelle (45) verbunden ist. Der Positionierhebel (51) ist nachgiebig sowohl mit dem Bodenteil (7) als auch mit dem Positionierhebel (51) verbunden. Zusätzlich zum Eingriff der Kurvenrolle (47) in die Kurvenbahn (48) ist das Bodenteil (7) entlang einer weiteren in Fig. 5 nicht dargestellten Stützbahn geführt, die zu Fig. 8 später näher erläutert wird.

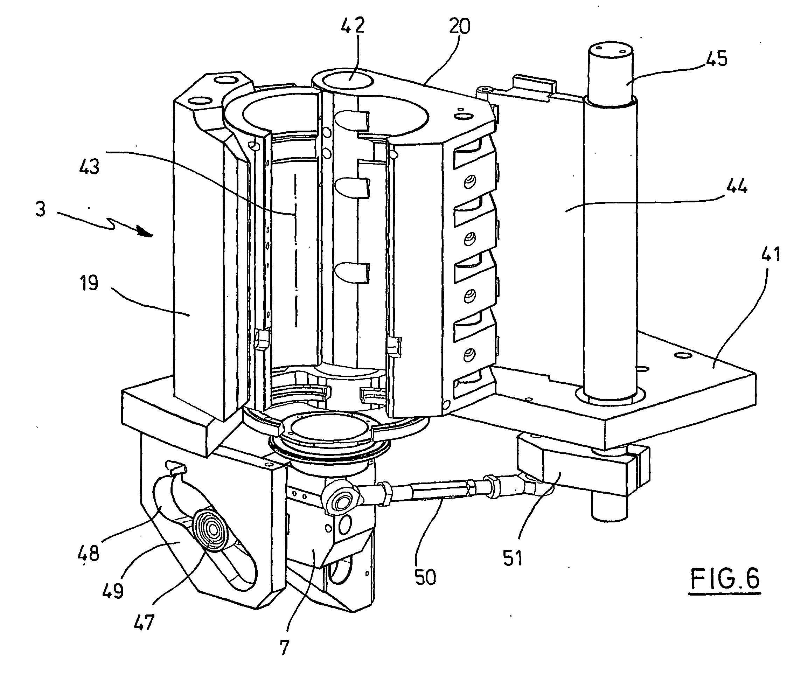

Fig. 6 zeigt eine gegenüber der Darstellung in Fig. 5 weiter geschlossenen Positionierung der Formträger (19, 20). Die Schließbewegung wird durch eine Drehung der Antriebswelle (45) und eine hieraus resultierende Verschwenkung des Kopplungshebels (44) vorgegeben. Gleichzeitig wird auch der Positionierhebel (51) verschwenkt und schiebt über die Koppelstange (50) das Bodenteil (7) mit seiner Kurvenrolle (47) entlang eines Teiles der Kurvenbahn (48) entlang. Das Bodenteil (7) führt hierdurch sowohl eine Bewegung in der Längsrichtung (43) als auch eine Translationsbewegung quer zur Längsrichtung (43) durch.

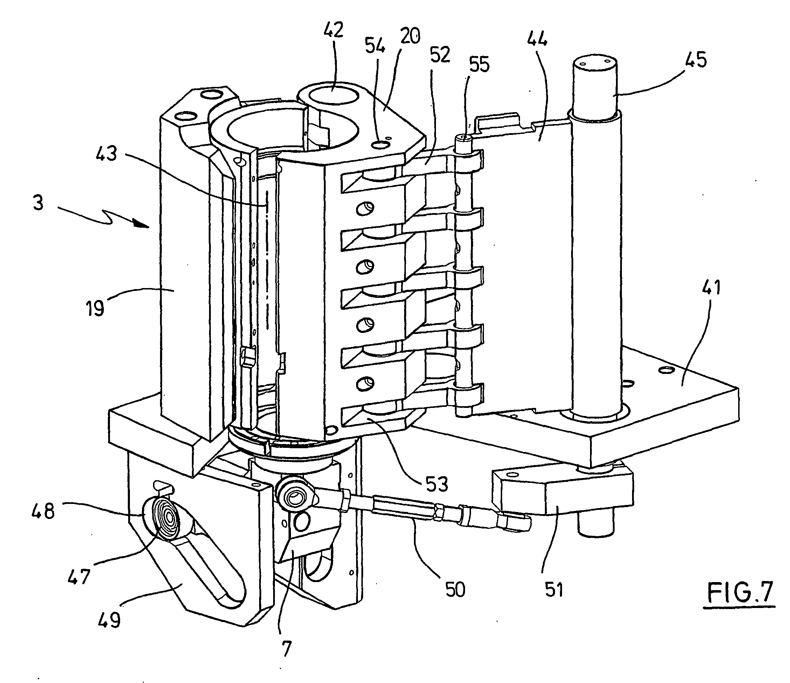

Fig. 7 zeigt die Blasstation (3) gemäß Fig. 5 und Fig. 6 in einem nahezu vollständig geschlossenen Zustand. Das Bodenteil (7) ist hierbei bereits vollständig in Längsrichtung (43) positioniert und führt zum Bewegungsabschluß lediglich noch eine Querbewegung zur Längsrichtung (43) durch. Dies ermöglicht die Bereitstellung eines Formschlusses zwischen dem Bodenteil (7) und dem Formträger (19). Zur Unterstützung dieses Bewegungsablaufes erstreckt sich die Kurvenbahn (48) mit einem kurzen Horizontalbereich, an den sich der schräg zur Horizontalen verlaufende Hauptbereich anschließt.

Vorteilhafterweise ist die Kurvenrolle (47) in der Kurvenbahn (48) quer verschieblich geführt. Dies ermöglicht eine fertigungstechnisch einfache Realisierung des Kurventrägers (49) als Platte, obwohl die Kurvenrolle (47) zusätzlich zu ihrer Bewegung entlang der Kurvenbahn (48) aufgrund der Drehbewegung des Positionierhebels (51) zusätzlich eine gekrümmte Bewegungsbahn durchläuft. Dies kann durch eine Querverschieblichkeit der Kurvenrolle (47) in der Kurvenbahn (48) ausgeglichen werden.

Typischerweise erfolgt die Dimensionierung des Positionierhebels (51) derart, daß eine parallel zur Längsrichtung (43) verlaufende Mittelachse des Bodenteiles (7) etwa quer zur Längsrichtung (43) die halbe Strecke durchläuft, die einer Bewegungsbahn einer Mittellinie des verschwenkbaren Formträgers (20) quer zur Längsrichtung (43) entspricht. Nach einer Durchführung der Öffnungsbewegung ist das Bodenteil (7) hierdurch im wesentlichen äquidistant zu den beiden Formträgern (19, 20) und somit zu den Formhälften (5, 6) angeordnet. Dies ermöglicht eine Entnahme der geblasenen Behälter (2) bei einer minimalen Öffnung der Blasstation (3).

Aus Fig. 7 ist ebenfalls erkennbar, daß zur weiteren Unterstützung einer kompakten Konstruktion der Kopplungshebel (44) über Querhebel (55) mit dem Formträger (20) verbunden ist, die in einem geöffneten Zustand der Blasstation (3) in kammartigen Vertiefungen (53) des Formträgers (20) versenkbar sind. Die Querhebel (52) sind um eine Längsachse (54) des Formträgers (20) und um eine Längsachse (55) des Kupplungshebels (44) verschwenkbar. Die Längsachsen (42, 54, 55) verlaufen im wesentlichen parallel zur Längsrichtung (43).

Fig. 8 zeigt die Blasstation (3) bei einer perspektivischen Darstellung von unten. Es ist insbesondere erkennbar, daß das Bodenteil (7) aus einem Bodenformträger (56), der eigentlichen Bodenform (57) sowie einem Positionierelement (58) ausgebildet ist, das die Kurvenrolle (47) haltert. Der Bodenformträger (56) und die Bodenform (57) sind starr miteinander verbunden. Gemäß einer bevorzugten Ausführungsform sind auch der Bodenformträger (56) und das Positionierelement (58) starr miteinander verbunden.

Gemäß dem in Fig. 8 dargestellten Ausführungsbeispiel weist das Positionierelement (58) eine Führungsbuchse (59) auf, die eine nicht dargestellte Führungswelle (60) umgreift. Insbesondere ist daran gedacht, die Führungswelle (60) als Verlängerung der in Fig. 8 ebenfalls nicht dargestellten Stationsachse (42) anzuordnen. Der Formträger (20) und das Positionierelement (58) verschwenken hierdurch um eine gemeinsame Drehachse.

Unter Bezugnahme auf Fig. 8 wird der Bewegungsablauf der Bodenform (7) nochmals erläutert. Ausgehend von dem Betriebszustand in Fig. 8 wird bei einer Öffnungsbewegung des Formträgers (20) über die Koppelstange (50) ein Zug auf das Bodenteil (7) ausgeübt und hierdurch wird das Positionierelement (58) um die Führungswelle (60) verschwenkt und gleichzeitig die Kurvenrolle (47) entlang der Kurvenbahn (48) positioniert. Die Bodenform (57) führt hierdurch sowohl eine Schwenkbewegung um die Führungswelle (60) herum als auch eine Translationsbewegung durch. Die Bewegungsbahn verläuft hierbei ähnlich wie ein Gewindegang einer Schraube.

## Patentansprüche

1. Vorrichtung zur Blasformung von Behältern (2), die mindestens eine auf einer Tragstruktur angeordnete Blasstation (3) zur Umformung von thermoplastischen Vorformlingen (1) in die Behälter (2) aufweist und bei der die Blasstation (3) mit mindestens zwei von Formträgern (19, 20) gehalterten Blasformsegmenten sowie einem Bodenteil (7) versehen ist, sowie bei der sowohl die Formträger (19, 20) als auch das Bodenteil (7) mechanisch positionierbar angeordnet und einer der Formträger (19, 20) unbeweglich und der andere Formträger (19, 20) verschwenkbar von der Tragstruktur (41) gehaltert ist, wobei das Bodenteil (7) relativ zu jedem der beiden Formträger (19, 20) beweglich angeordnet ist, **dadurch gekennzeichnet, daß** die Formträger (19, 20) und das Bodenteil (7) zur Durchführung von Positionierbewegungen mechanisch miteinander gekoppelt sind, und daß das Bodenteil (7) relativ zu den Formträgern (19, 20) eine Bewegungsbahn aufweist, die sowohl mit einer in einer Längsrichtung (43) der Blasstation (7) verlaufenden Komponente als auch mit einer quer zur Längsrichtung (43) verlaufenden Komponente versehen ist.

2. Vorrichtung nach Anspruch 1, **dadurch gekennzeichnet, daß** das Bodenteil (7) kurvengesteuert positionierbar ist.

3. Vorrichtung nach Anspruch 1 oder 2, **dadurch gekennzeichnet, daß** das Bodenteil (7) mit dem beweglichen Formträger (20) gekoppelt ist.

4. Vorrichtung nach einem der Ansprüche 1 bis 3, **dadurch gekennzeichnet, daß** das Bodenteil (7) relativ zu einer vertikal verlaufenden Achse drehbar angeordnet ist.

5. Vorrichtung nach Anspruch 4, **dadurch gekennzeichnet, daß** sich die Achse als eine Verlängerung einer Stationsachse (42) der Blasstation (3) erstreckt.

6. Vorrichtung nach einem der Ansprüche 1 bis 5, **dadurch gekennzeichnet, daß** das Bodenteil (7) mit einer Kurvenrolle (47) in eine Kurvenbahn (48) eingreift, die sich im wesentlichen tangential zu einer Bewegungsbahn des verschwenkbaren Formträgers (20) erstreckt.

7. Vorrichtung nach einem der Ansprüche 1 bis 6, **dadurch gekennzeichnet, daß** das Bodenteil (7) eine Bewegungsbahn aufweist, die innerhalb eines Segmentes einer Mantelkurve angeordnet ist, die im wesentlichen zylindrisch zur Stationsachse (42) positioniert ist.

8. Vorrichtung nach einem der Ansprüche 1 bis 7, **dadurch gekennzeichnet, daß** das Bodenteil (7) über eine Koppelstange (50) und einen Positionierhebel (51) mit einer Antriebswelle (45) verbunden ist.

9. Vorrichtung nach Anspruch 8, **dadurch gekennzeichnet, daß** Enden der Koppelstange (50) nachgiebig sowohl mit dem Bodenteil (7) als auch mit dem Positionierhebel (51) gekoppelt sind.

10. Vorrichtung nach einem der Ansprüche 1 bis 9, **dadurch gekennzeichnet, daß** die Blasstation auf einem Blasrad (25) angeordnet ist.

11. Vorrichtung nach einem der Ansprüche 1 bis 10, **dadurch gekennzeichnet, daß** das Bodenteil (7) quer zu einer von den Blasformsegmenten in einem geschlossenen Zustand der Blasstation (3) aufgespannten Trennebene positionierbar ist.

## Claims

1. Apparatus for blow moulding containers (2), which has at least one blowing station (3) arranged on a supporting structure for reshaping thermoplastic preforms (1) into the containers (2), and in which the blowing station (3) is provided with at least two blow mould segments, supported by mould carriers (19, 20), and a base part (7), and in which both the mould carriers (19, 20) and the base part (7) are arranged such that they may be positioned mechanically and one of the mould carriers (19, 20) is immovably supported by the supporting structure (41) and the other mould carrier (19, 20) is pivotably supported by the supporting structure (41), wherein the base part (7) is arranged such that it is movable relative to each of the two mould carriers (19, 20), **characterised in that** the mould carriers (19, 20) and the base part (7) are mechanically coupled to one another for executing positioning movements, and **in that** the base part (7) has a movement path relative to the mould carriers (19, 20) which has both a component extending in a longitudinal direction (43) of the blowing station (7) and also a component extending transversely to the longitudinal direction (43).

2. Apparatus according to Claim 1, **characterised in that** the base part (7) may be positioned under cam control.

3. Apparatus according to Claim 1 or 2, **characterised in that** the base part (7) is coupled to the movable mould carrier (20).

4. Apparatus according to one of Claims 1 to 3, **characterised in that** the base part (7) is arranged such that it is rotatable relative to a vertically extending axis.

5. Apparatus according to Claim 4, **characterised in that** the axis proceeds as an extension of a station axis (42) of the blowing station (3).

6. Apparatus according to one of Claims 1 to 5, **characterised in that** the base part (7) engages with a cam roller (47) in a cam track (48) which extends substantially tangentially to a movement path of the pivotable mould carrier (20).

7. Apparatus according to one of Claims 1 to 6, **characterised in that** the base part (7) has a movement path which is arranged within a segment of a cylinder cam which is positioned substantially cylindrically with respect to the station axis (42).

8. Apparatus according to one of Claims 1 to 7, **characterised in that** the base part (7) is connected to a drive shaft (45) by way of a coupling rod (50) and a positioning lever (51).

9. Apparatus according to Claim 8, **characterised in that** ends of the coupling rod (50) are flexibly coupled both to the base part (7) and to the positioning lever (51).

10. Apparatus according to one of Claims 1 to 9, **characterised in that** the blowing station is arranged on a blowing wheel (25).

11. Apparatus according to one of Claims 1 to 10, **characterised in that** the base part (7) may be positioned transversely to a parting plane fixed by the blow mould segments in a closed state of the blowing station (3).

## Revendications

1. Dispositif pour le formage par soufflage de récipients (2) qui présente au moins un poste de soufflage (3), qui, disposé sur une structure de support, est destiné à transformer en récipients (2) des préformes (1) thermoplastiques, et dans lequel le poste de soufflage (3) est pourvu d'au moins deux segments de moule de soufflage, maintenus par des supports de moules (19, 20), ainsi que d'une pièce de fond (7), et dans lequel aussi bien le support de moule (19, 20) que la pièce de fond (7) sont agencés de manière à pouvoir être positionnés mécaniquement, et dans lequel l'un des supports de moule (19, 20) est immobile tandis que l'autre support de moule (19, 20) est maintenu à pivotement par la structure de support (41), la pièce de fond (7) étant mobile par rapport à chacun des deux supports de moules (19, 20), **caractérisé en ce que** les supports de moules (19, 20) et la pièce de fond (7) sont couplés mécaniquement ensemble pour l'exécution de mouvements de positionnement, et que la pièce de fond (7) présente une surface de déplacement par rapport aux supports de moules (19, 20), qui est pourvue d'un composant s'étendant dans la direction longitudinale (43) du poste de soufflage (3), ainsi que d'un composant s'étendant perpendiculairement à la direction longitudinale (43).

2. Dispositif selon la revendication 1, **caractérisé en ce que** la pièce de fond (7) peut être positionnée, commandée par came.

3. Dispositif selon revendication 1 ou 2, **caractérisé en ce que** la pièce de fond (7) est couplée avec le support de moule (20) mobile.

4. Dispositif selon l'une des revendications 1 à 3, **caractérisé en ce que** la pièce de fond (7) est agencée en rotation par rapport à un axe vertical.

5. Dispositif selon la revendication 4, **caractérisé en ce que** l'axe s'étend en prolongement d'un axe (42) du poste de soufflage (3).

6. Dispositif selon l'une des revendications 1 à 5, **caractérisé en ce que** la pièce de fond (7) s'engage avec un galet de courbe (47), dans un chemin de came (48) qui s'étend essentiellement tangentiellement par rapport à une surface de déplacement du support de moule (20) pivotant.

7. Dispositif selon l'une des revendications 1 à 6, **caractérisé en ce que** la pièce de fond (7) présente une surface de déplacement, qui est disposée à l'intérieur d'un segment d'une came périphérique, qui est positionnée, sensiblement cylindrique, par rapport à l'axe (42) du poste.

8. Dispositif selon l'une des revendications 1 à 7, **caractérisé en ce que** la pièce de fond (7) est reliée à un arbre de commande (45) par l'intermédiaire d'une barre de couplage (50) et d'un levier de positionnement (51).

9. Dispositif selon la revendication 8, **caractérisé en ce que** la barre de couplage (50) est couplée souplement aussi bien avec la pièce de fond (7) qu'avec le levier de positionnement (51).

10. Dispositif selon l'une des revendications 1 à 9, **caractérisé en ce que** le poste de soufflage est disposé sur une roue de soufflage (25).

11. Dispositif selon l'une des revendications 1 à 10, **caractérisé en ce que** la pièce de fond (7) peut être positionnée perpendiculairement par rapport à un plan de séparation d'un segment de moule de soufflage, quand le poste de soufflage (3) est à l'état fermé.
